# EUROPEAN PATENT APPLICATION

(11) **EP 4 768 747 A1**
(43) Date of publication of application: **01.07.2026**
(21) Application number: 24858515.0
(22) Date of filing: 26.08.2024
(51) Int. Cl.: F16D 43/21, F16F 15/315, F16F 15/131, F16F 15/134, F16F 15/139, F16H 35/10

(54) **TORQUE LIMITER, TRANSMISSION ASSEMBLY AND VEHICLE**

(30) Priority: 25.08.2023 CN 202311079736
(71) Applicant: Nanjing Valeo Clutch Company, Nanjing, Jiangsu 211153 (CN)
(72) Inventor: HE, Yuxi, Nanjing, Jiangsu 211153 (CN)
(74) Representative: Valeo Powertrain Systems
(86) International application number: PCT/CN2024/114519
(87) International publication number: WO 2025/044979

(57) **Abstract**

The present disclosure relates to a torque limiter, comprising: a flywheel; a first axial load-bearing portion; a second axial load-bearing portion, which is fixed relative to the first axial load-bearing portion in an axial direction and is spaced therefrom by a certain distance; a torque input plate, which is fixed relative to the flywheel in a radial direction and drives the flywheel to rotate integrally about a rotation axis; and a driven plate configured to output torque. The torque input plate and the driven plate are axially arranged between the first and second axial load-bearing portions, with the torque input plate closer to the first axial load-bearing portion and the driven plate closer to the second axial load-bearing portion. The torque input plate and the driven plate abut against each other with a certain axial force, and the driven plate is driven to rotate about a rotation axis by means of friction between the two. The present disclosure further relates to a transmission assembly comprising such a torque limiter and a vehicle comprising the transmission assembly.

## Description

The present application claims the priority of Chinese patent application number 202311079736.8 filed on August 25, 2023, the entire disclosed contents of which are incorporated herein by reference as part of the present application.

### TECHNICAL FIELD

The present disclosure relates to a torque limiter. In particular, the torque limiter comprises a flywheel integrated therein. The present disclosure further relates to a transmission assembly comprising such a torque limiter and a vehicle comprising the transmission assembly.

### BACKGROUND

The torque produced by the engine of a motor vehicle is usually inconstant and fluctuates frequently. Such inconstant torque may be transmitted to the gearbox, causing the gearbox to vibrate and thus generating particularly undesirable noise or impacts, etc. The provision of a torque fluctuation absorbing mechanism in the drivetrain of a vehicle, to reduce the adverse effects of vibration and improve vehicle driving comfort, is already known. The torque fluctuation absorbing mechanism may allow fluctuations in the torque generated by the vehicle engine to be limited and absorbed. It is known that the torque fluctuation absorbing mechanism may comprise a torsional vibration damper and a torque limiter. A torsional vibration damper usually absorbs and reduces torque fluctuations by a spring structure, while a torque limiter can limit a torque fluctuation that exceeds the maximum torque allowed by the torsional vibration damper. Specifically, when a torque fluctuation exceeds the maximum allowable torque, the torque limiter slides, thereby limiting the transmitted torque.

In the prior art, a flywheel fixed to a crankshaft of the vehicle engine is an upstream component of the torque limiter in the vehicle drivetrain. The torque limiter is fixed to and driven by the flywheel. The flywheel and the torque limiter are of a separate structure. During installation, the flywheel is first fixed to the engine crankshaft by bolts or other fasteners, and then the torque limiter is fixed to the flywheel by bolts. This separate configuration of the flywheel and torque limiter requires two separate steps for installation of the flywheel and torque limiter, increasing the assembly process. Furthermore, this separate configuration increases the number of parts in the torque limiter, leading to the increase of material costs.

Therefore, existing torque limiters and flywheels have the disadvantages of having a large number of parts, high cost, and complicated assembly.

### SUMMARY OF THE INVENTION

Therefore, the present disclosure is intended to solve the above problems existing in the existing torque limiters and flywheels, and an objective thereof is to provide a torque limiter which comprises a flywheel integrated therein, has a compact and robust configuration, and can be manufactured and assembled in a simple and cost-saving manner.

The objective is achieved by a torque limiter according to an embodiment of the present disclosure, comprising: a flywheel; a first axial load-bearing portion; a second axial load-bearing portion, which is fixed relative to the first axial load-bearing portion in an axial direction and is spaced therefrom by a certain distance; a torque input plate, which is fixed relative to the flywheel in a radial direction and drives the flywheel to rotate integrally about a rotation axis; and a driven plate configured to output torque. The torque input plate and the driven plate are axially arranged between the first axial load-bearing portion and the second axial load-bearing portion, with the torque input plate being arranged closer to the first axial load-bearing portion, and the driven plate being arranged closer to the second axial load-bearing portion. The torque input plate and the driven plate abut against each other with a certain axial force, and the torque input plate drives the driven plate to rotate about the rotation axis by means of friction between the torque input plate and the driven plate.

The torque limiter according to the present disclosure comprises a flywheel integrated therein, so that the flywheel can be simultaneously mounted in a single assembly operation of mounting the torque limiter, thereby eliminating one assembly step. In the present disclosure, the torque input plate of the torque limiter drives the flywheel to rotate integrally in a circumferential direction. Furthermore, the relative fixation between the torque input plate and the flywheel in the radial direction prevents the center of gravity of the flywheel from deviating from the rotation axis, preventing the flywheel from vibrating during torque transmission. In the prior art, the flywheel is directly driven by the engine crankshaft, and the torque limiter is then driven by the flywheel. The transmission assembly according to the present disclosure has a power transmission path that differs from that of the prior art. The torque input plate of the torque limiter further drives the driven plate configured to output the torque by means of friction. Relative sliding can occur between the torque input plate and the driven plate to limit the torque transmitted. The torque input plate simultaneously drives both the flywheel and the driven plate, thereby reducing the number of components in the transmission assembly.

The transmission assembly according to the present disclosure may also have one or more of the following features, alone or in combination.

According to one embodiment of the present disclosure, the torque limiter further comprises an elastic member axially arranged between the first axial load-bearing portion and the second axial load-bearing portion, and the elastic member biases one of the torque input plate and the driven plate toward the other of the torque input plate and the driven plate. The biasing force of the elastic member can increase the friction between the torque input plate and the driven plate to adjust the maximum torque that the torque limiter can transmit.

According to one embodiment of the present disclosure, the torque input plate comprises a plurality of locking teeth extending radially outward from an outer periphery thereof, and the torque input plate is fixed relative to the flywheel in the radial direction through the locking teeth.

According to one embodiment of the present disclosure, the elastic member is arranged between the first axial load-bearing portion and the torque input plate; or the elastic member is arranged between the driven plate and the second axial load-bearing portion.

According to one embodiment of the present disclosure, the torque limiter further comprises a friction lining arranged on at least one of two axial sides adjacent to the driven plate. When the torque limiter is in operation, the torque input plate, the first and second axial load-bearing portions, and the flywheel rotate together, forming the torque input side. Torque is transmitted from the input side to the driven plate through the friction lining. When the torque input through the torque input plate exceeds the maximum torque that the torque limiter can transmit, sliding occurs between the friction lining and the driven plate, thereby providing the function of eliminating torque fluctuations.

According to one embodiment of the present disclosure, at least one of the plurality of locking teeth is provided with a locking hole, and the torque input plate is fastened to the flywheel through a fastener passing through the locking hole. With this fastening, the torque input plate and the flywheel rotate together, that is, the torque input plate and the flywheel are fixed in the circumferential, radial, and axial directions.

According to one embodiment of the present disclosure, the torque limiter further comprises an intermediate plate and the intermediate plate comprises: a plurality of load-bearing tabs; a load-bearing ring spaced from the load-bearing tabs in an axial direction by a certain distance, with each load-bearing tab connected to the load-bearing ring through a pair of connecting strips; and a plurality of load-bearing teeth each arranged on a radially inner side of a corresponding load-bearing tab, with each load-bearing tooth arranged in a circumferential direction between a pair of corresponding connecting strips. The load-bearing teeth form a first axial load-bearing portion of the torque limiter, and the load-bearing ring forms a second axial load-bearing portion of the torque limiter.

According to one embodiment of the present disclosure, the load-bearing teeth are spaced from the load-bearing tabs in an axial direction by a certain distance, and are connected to the load-bearing tabs through bent portions.

According to one embodiment of the present disclosure, the locking tooth is located in a circumferential direction between two adjacent load-bearing tabs, and is inserted between two adjacent pairs of connecting strips and/or between two adjacent load-bearing tabs.

According to one embodiment of the present disclosure, the torque input plate further comprises a plurality of transmission teeth extending radially outward from an outer periphery thereof, each transmission tooth being inserted between a pair of corresponding connecting strips.

According to one embodiment of the present disclosure, the flywheel comprises recessed portions that are recessed in the axial direction, and the locking teeth are received within the recessed portions.

According to one embodiment of the present disclosure, at least one of the plurality of locking teeth is provided with a locking hole, the flywheel is provided with a mating hole aligned with the locking hole, and a locking pin passes through the locking hole and is inserted into the mating hole, so that the torque input plate is fixed relative to the flywheel in the radial direction.

According to one embodiment of the present disclosure, the flywheel comprises a body portion and a flange portion extending radially inward from the body portion, and the flange portion forms one of the first axial load-bearing portion or the second axial load-bearing portion of the torque limiter.

According to one embodiment of the present disclosure, the torque limiter further comprises a carrier plate fastened together with the flywheel, and the carrier plate is spaced from the flange portion in an axial direction by a certain distance, and forms the other of the first axial load-bearing portion or the second axial load-bearing portion of the torque limiter.

According to one embodiment of the present disclosure, the carrier plate extends beyond the mating hole to constrain an axial position of the locking pin. That is, the axial movement of the locking pin toward the carrier plate away from the mating hole is limited by the carrier plate.

According to one embodiment of the present disclosure, the flywheel comprises connecting grooves arranged on an inner periphery of the body portion, the mating holes are located in the connecting grooves in a circumferential direction, and the locking teeth are inserted into the connecting grooves.

According to one embodiment of the present disclosure, the torque limiter further comprises two carrier plates that are fastened together with the flywheel on two axial sides of the flywheel, respectively, and the two carrier plates form a first load-bearing portion and a second bearing portion of the torque limiter, respectively.

According to one embodiment of the present disclosure, the flywheel comprises connecting grooves arranged on an inner periphery thereof, and the locking teeth are inserted into the coupling grooves.

According to one embodiment of the present disclosure, the torque input plate is provided with at least one locking hole, the flywheel is provided with a mating hole aligned with the locking hole, and a locking pin passes through the locking hole and is inserted into the mating hole, so that the torque input plate is fixed relative to the flywheel in the radial direction.

The present disclosure further relates to a transmission assembly comprising the torque limiter as described above and a torsional vibration damper. The torsional vibration damper comprises an input portion, an output portion, and a spring arranged to be circumferentially compressed between the input portion and the output portion. The input portion of the torsional vibration damper is fastened together with the driven plate of the torque limiter, or the input portion of the torsional vibration damper is integrally formed with the driven plate of the torque limiter.

According to one embodiment of the present disclosure, the torsional vibration damper comprises a through hole, and a fastener is allowed to pass through the through hole to fasten the torque input plate of the torque limiter to an upstream component of the transmission assembly.

The present disclosure further relates to a vehicle, comprising the transmission assembly as described above.

### Brief Description of the Drawings

The foregoing and other features and advantages of the present disclosure will become more apparent from the following detailed description of exemplary embodiments with reference to the drawings, and the description and the drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a schematic view of a transmission assembly according to one embodiment of the present disclosure.
Fig. 2 is an exploded view of the transmission assembly according to the one embodiment of the present disclosure.
Fig. 3 is a cross-sectional view of the transmission assembly according to the one embodiment of the present disclosure.
Fig. 4 is an enlarged view of a portion of Fig. 3, in which a torsion limiter is shown in detail.
Fig. 5 shows in detail a portion of an intermediate plate of a torsion limiter in the embodiment shown in Fig. 3.
Fig. 6 shows a torque input plate in the embodiment shown in Fig. 3.
Fig. 7 is a schematic view of the cooperation between the torque input plate and the intermediate plate.
Fig. 8 shows the cooperation of a flywheel, the torque input plate and the intermediate plate from different perspectives.
Fig. 9 is a partial cross-sectional view of a torque limiter according to another embodiment of the present disclosure.
Fig. 10 shows a torque input plate in the embodiment shown in Fig. 9.
Fig. 11 shows a flywheel in the embodiment shown in Fig. 9.

In the drawings, identical or similar components are indicated by identical reference numerals.

### Detailed Description of Embodiments

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. "Comprise", "include" or any other similar term means that the element or object appearing before the term covers the elements or objects and equivalents thereof listed after the term but does not exclude other elements or objects. "Axial direction", "radial direction", "circumferential direction", and other directions are defined relative to a rotation axis X of the torque limiter, wherein the axial direction is the direction of extension of the rotation axis X, the radial direction is the direction perpendicular to the rotation axis X, and the circumferential direction is the direction of a circumference around the rotation axis X.

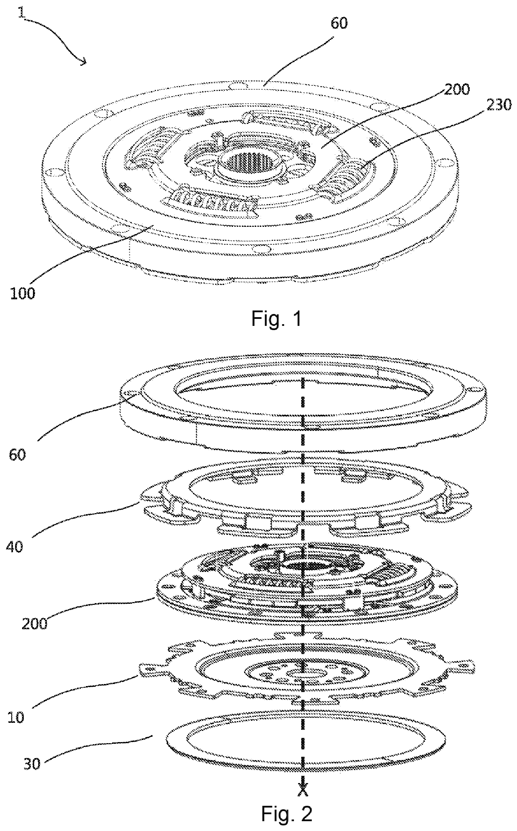

Fig. 1 is a schematic view of a transmission assembly 1 according to one embodiment of the present disclosure. Fig. 2 is an exploded view of the transmission assembly shown in Fig. 1.

The transmission assembly 1 may be configured to transmit torque between an engine and a gearbox of a motor vehicle. The transmission assembly 1 may be divided into two parts: a torque limiter 100 and a torsional vibration damper 200. The torque limiter 100 is connected to a crankshaft of the vehicle engine and is driven by the crankshaft to transmit torque around an axis of rotation X. The torsional vibration damper 200 is located inside the torque limiter 100 as a whole, and the torque transmitted by the torque limiter 100 is outputted by the torsional vibration damper to the gearbox of the motor vehicle. The torque limiter 100 has a predetermined maximum torque; even if the torque generated by the engine exceeds the maximum torque, the torque transmitted to the torsional vibration damper 200 will not exceed the maximum torque.

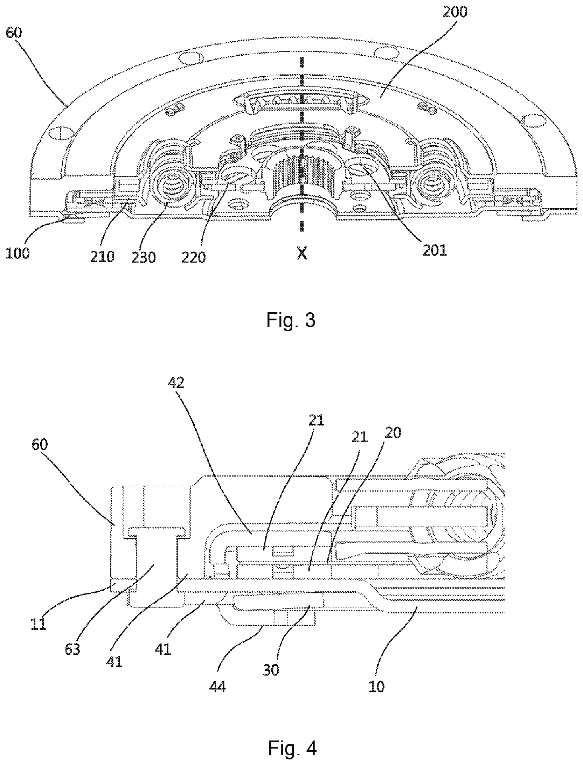

Referring to Fig. 3, the torsional vibration damper 200 has an input portion 210, an output portion 220, and four springs 230 arranged to be compressed between the input portion 210 and the output portion 220 in the circumferential direction. The input portion 210 is fixed to a driven plate 20 of the torque limiter 100, or integrally formed with the driven plate 20, so as to receive torque transmitted from the torque limiter 100. The spring 230 is a coil spring, of which one end is acted on by the input portion 210 and the other end acts on the output portion 220, so as to transmit torque from the input portion 210 to the output portion 220. The spring 230 can absorb and reduce fluctuations in torque by being compressed and extending. It is conceivable that the driven plate 20 of the torque limiter 100 may also be fixed to the output portion 220 of the torsional vibration damper 200. The torsional vibration damper 200 comprises a through hole 201, and a fastener such as a bolt is allowed to pass through the through hole 201 to fasten the torque input plate 10 of the torque limiter 100 to an upstream component of the transmission assembly 1, such as the crankshaft of the engine.

Referring further to Figs. 1 and 2, and in conjunction with Figs. 3 to 8, the torsion limiter 100 comprises a flywheel 60, a torque input plate 10, a driven plate 20, an elastic member 30, and an intermediate plate 40. The torque input plate 10 is connected radially inward to the upstream component such as the engine crankshaft. Thus, the torsion limiter 100 receives torque from the engine through the torque input plate 10. The torque input plate 10 needs to be connected to the engine crankshaft and is therefore located closer to the engine side (lower side in Fig. 4) than the driven plate 20 configured to output torque.

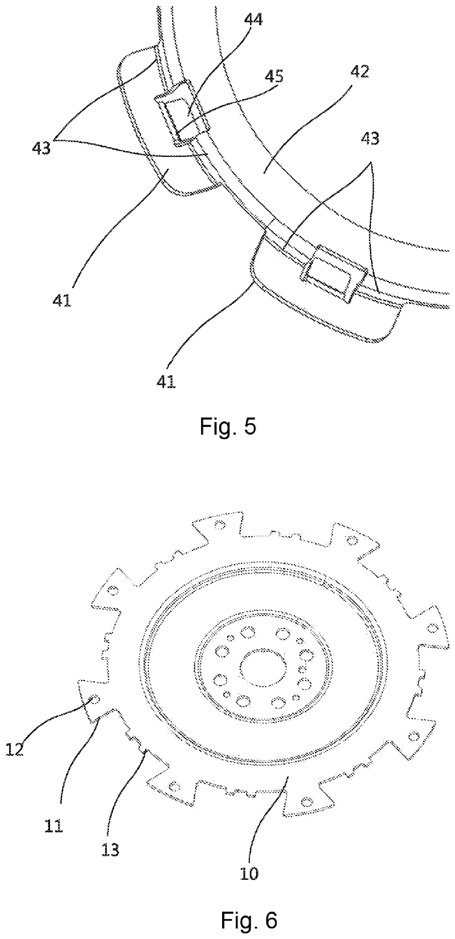

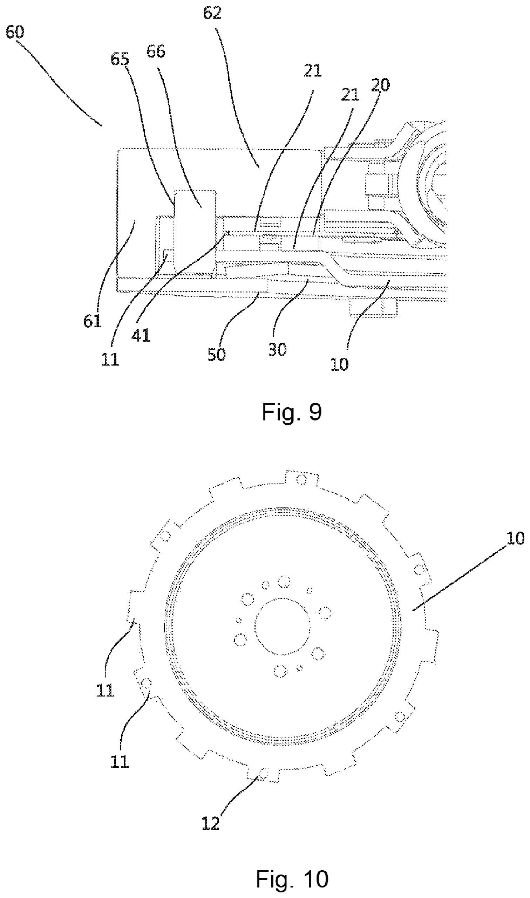

The flywheel 60 is in the form of an inertia ring, which is fixed in the circumferential direction relative to the torque input plate 10, and is driven by the torque input plate 10 to rotate about the rotation axis X. The flywheel 60 is also fixed in a radial direction relative to the torque input plate 10 to keep the center of gravity of the flywheel 60 on the rotation axis X, preventing the flywheel 60 from vibrating during transmission. The flywheel 60 has a large moment of inertia, and may be configured to absorb the fluctuations in the engine torque output, making its torque output more uniform. Referring to Figs. 6 and 10, the outer periphery of the torque input plate 10 is provided with a plurality of locking teeth 11 extending radially outwardly. The torque input plate 10 is fixed to the flywheel 60 in the radial direction through the locking teeth 11 and drives the flywheel 60 to rotate through the locking teeth 11.

The radially inner portion of the driven plate 20 is fixedly connected to the input portion 210 of the torsional vibration damper 200, and its radially outer portion abuts against the torque input plate 10 with a certain axial force. In the embodiment shown in Fig. 4, friction linings 21 are arranged adjacent to the driven plate 20 on two axial sides of the driven plate 20. Therefore, the driven plate 20 is in contact with and interacts with the friction linings 21 on its two axially opposite surfaces. In other embodiments not shown in the drawings, the friction lining 21 may be arranged only on one of the two axial sides of the driven plate 20. Another conceivable technical solution is that no friction lining 21 is provided at all, and instead, the surface of the torque input plate 10 or the driven plate 20 is treated to make it suitable for transmitting a certain torque.

When the transmission assembly is operating, the engine of the vehicle drives the torque input plate 10, and the torque input plate 10 in turn drives the flywheel 60 to rotate about the rotation axis X through the locking teeth 11. Through the direct friction between the torque input plate 10 and the driven plate 20, or the indirect friction generated by the friction lining 21, the torque input plate 10 can also drive the driven plate 20 and the input portion 210 of the torsional vibration damper 200 to rotate about the rotation axis X, thereby realizing torque transmission to the torsional vibration damper 200. When the torque transmitted from the engine to the torque limiter 100 reaches or exceeds the maximum torque of the torque limiter 100, sliding occurs between the driven plate 20 and the torque input plate 10, thereby limiting the torque transmitted to the torsional vibration damper 200 to the maximum torque of the torque limiter 100.

To enable the torque input plate 10 and the driven plate 20 to abut against each other, the torque limiter 100 needs to comprise two axial load-bearing portions, with the torque input plate 10 and the driven plate 20 axially arranged between the two axial load-bearing portions. Without loss of generality, in the present disclosure, the axial load-bearing portion closer to the torque input plate 10 may be referred to as a first axial load-bearing portion, and the axial load-bearing portion closer to the driven plate 20 may be referred to as a second axial load-bearing portion.

The greater the friction between the torque input plate 10 and the driven plate 20, the greater the maximum torque that the torque limiter 100 can transmit. Increasing the axial force between the torque input plate 10 and the driven plate 20 against each other can increase the friction between the two. Thus, the torsion limiter 100 comprises an elastic member 30 axially arranged between the first axial load-bearing portion and the second axial load-bearing portion. The elastic member 30 may be in the form of a plate spring, which is supported by the first axial load-bearing portion or the second axial load-bearing portion, and axially presses against the torque input plate 10 toward the driven plate 20, or axially presses against the driven plate 20 toward the torque input plate 10. Optionally, the torque input plate 10 may be formed by an elastic material, so that the torque input plate 10 itself can generate an axial force that pushes the driven plate 20 toward the second axial load-bearing portion, thereby eliminating the need to provide a dedicated elastic member.

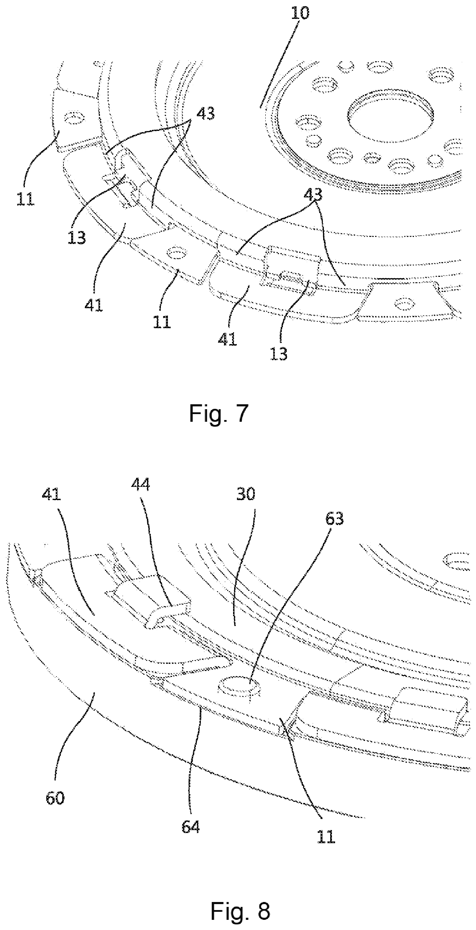

In the embodiments shown in Figs. 4-8, the torque input plate 10 and the flywheel 60 are fastened together. As shown in Fig. 4, the locking teeth 11 of the torque input plate 10 are provided with locking holes 12, and fasteners 63 pass through the locking holes 12 to fasten the torque input plate 10 to the flywheel. The fasteners 63 may be screws, rivets, threaded rods, etc. Referring to Fig. 8, the flywheel 60 comprises recessed portions 64 that are recessed in the axial direction, and the locking teeth 11 are received in the recessed portions 64. The recessed portions 64 allow to easily position the torque input plate 10 and the flywheel 60 in the circumferential direction. Furthermore, the locking teeth 11 may also abut against the side walls of the recessed portions 64, thereby achieving relative fixation of the torque input plate 10 and the flywheel 60 in the circumferential direction without relying on fasteners, and transmitting torque.

In this embodiment, the first axial load-bearing portion and the second axial load-bearing portion of the torsion limiter 100 are provided by an intermediate plate 40. Referring to Figs. 4 and 5, the intermediate plate 40 is integrally formed and comprises a plurality of load-bearing tabs 41 and a load-bearing ring 42. The load-bearing ring 42 is spaced from the load-bearing tabs 41 in the axial direction by a predetermined distance, and each load-bearing tab 41 is connected to the load-bearing ring 42 through a pair of connecting strips 43. The intermediate plate 40 further comprises a plurality of load-bearing teeth 44 arranged on the radially inner sides of the load-bearing tabs 41. In the circumferential direction, each load-bearing tooth 44 is arranged between a pair of connecting strips 43 that connect the corresponding load-bearing tab 41 to the load-bearing ring 42. Furthermore, the outer diameter of the load-bearing ring 42 is smaller than the diameter of the radially inner side of the load-bearing tab 41, so that the projection of the load-bearing ring 42 in the axial direction is within the load-bearing tab 41.

The driven plate 20 is slidably clamped between the load-bearing ring 42 and the torque input plate 10 by an elastic member 30 arranged axially between the load-bearing tooth 44 and the torque input plate 10. The torque input plate 10 and the driven plate 20 are located between the load-bearing tooth 44 of the first ring 41 and the load-bearing ring 42 in the axial direction. The load-bearing tooth 44 and the load-bearing ring 42 form two axial load-bearing portions of the torque limiter 100. In the embodiment shown in Fig. 4, the load-bearing tooth 44 forms the first axial load-bearing portion of the torque limiter 100, and the load-bearing ring 42 forms the second axial load-bearing portion of the torque limiter 100.

The load-bearing ring 42 and the load-bearing tabs 41 are connected to each other through a plurality of connecting strips 43. Specifically, referring to Fig. 5, a pair of connecting strips 43 has one end which is connected to the radially inner side of the load-bearing tab 41, extends axially to the height of the load-bearing ring 42, and is connected to the radially outer side of the load-bearing ring 42. The load-bearing tabs 41 are evenly distributed in the circumferential direction. The load-bearing tooth 44 is located on the radially inner side of the load-bearing tab 41 between a pair of connecting strips 43 that connect the load-bearing tab 41 to the load-bearing ring 42, is spaced from the load-bearing tab 41 in the axial direction by a certain distance, and is connected to the load-bearing tab 41 through a bent portion 45, so that it is located inside the load-bearing tab 41 in the radial direction. Before assembling the torque limiter 100, the load-bearing tooth 44 may extend axially from the load-bearing tab 41. The bent portion 45 is formed by bending the load-bearing tooth 44 during the assembly of the torque limiter 100. Thus, the load-bearing tooth 44 does not hinder the assembly of the torque input plate 10, the driven plate 20 and/or the elastic member 30, etc. in the axial direction, and can support the elastic member 30 after assembly, so that the torque input plate 10, the driven plate 20 and/or the elastic member 30 are clamped between the load-bearing tooth 44 and the load-bearing ring 42.

Fig. 7 shows the cooperation between the torque input plate 10 and the intermediate plate 40. As shown in the figure, in the assembly configuration of the torque limiter 100, the locking tooth 11 of the torque input plate 10 extends radially and is located in a circumferential direction between two adjacent load-bearing tabs 41. The intermediate plate 40 is movable relative to the torque input plate 10 in the axial direction, for example, under the action of the elastic element 30. The axial position of the locking tooth 11 inserted into the intermediate plate 40 may also vary. The locking tooth 11 may be inserted in the axial direction closer to the load-bearing tab 43 between two adjacent load-bearing tabs 43, or may be inserted in the axial direction closer to the load-bearing ring 42 between two adjacent pairs of connecting strips 43. Correspondingly, a certain axial clearance may exist between the load-bearing tab 41 of the intermediate plate 40 and the flywheel 60.

If relative sliding occurs between the torque input plate 10 and the intermediate plate 40 in the circumferential direction, the locking tooth 11 will abut against the side wall of the load-bearing tab 41 or the connecting strip 43, preventing further sliding of the intermediate plate 40. Therefore, the locking tooth 11 fixes the intermediate plate 40 relative to the torque input plate 10 in the circumferential direction. This also realizes torque transmission from the torque input plate 10 to the intermediate plate 40. In the embodiment shown in Fig. 7, the width of the locking tooth 11 is approximately equal to the width of the spacing between two adjacent load-bearing tabs 43 and/or the spacing between two adjacent pairs of connecting strips 43 to eliminate relative sliding as much as possible. As can be understood by those skilled in the art, the width of the locking tooth 11 may also be smaller than the width of the spacing between two adjacent load-bearing tabs 43 or two adjacent pairs of connecting strips 43.

The torque input plate 10 may also have a plurality of transmission teeth 13, which extend radially outward from the outer periphery of the torque input plate 10 and are arranged between adjacent locking teeth 11. In the assembly configuration of the torque limiter 100, the angular position of the transmission tooth 13 approximately coincides with that of the load-bearing tooth 44, and they are inserted between a pair of corresponding connecting strips 43. The engagement of the transmission teeth 13 with the connecting strips 43 also allows the intermediate plate 40 to be fixed relative to the torque input plate 10 in the circumferential direction.

With the above configuration, the torque input plate 10, the intermediate plate 40, and the flywheel 60 of the torque limiter 100 are circumferentially relatively fixed and rotate together, thereby collectively forming the input side of the torque limiter 100. The torque output from the torque limiter 100 to the torsional vibration damper 200 is realized through the driven plate 20.

Figs. 9 to 11 show another embodiment of the torque limiter. In this embodiment, radial locking of the torque input plate 10 to the flywheel 60 is achieved through locking pins 66. As shown in the figures, the locking teeth 11 of the torque input plate 10 are provided with locking holes 12, and the flywheel 60 is provided with mating holes 65 aligned with the locking holes 12. The locking pin 66 passes through the locking hole 12 and is inserted into the mating hole 65, so that the torque input plate 10 is fixed relative to the flywheel 60 in both the circumferential and radial directions. The mating hole 65 shown in Fig. 9 is a blind hole, which is helpful to constrain the axial position of the locking pin 66. Optionally, the mating hole 65 may also be configured as a through hole, with the locking pin 66 interference-fitted to the mating hole 65 to prevent it from falling off the flywheel.

Furthermore, the intermediate plate 40 is also omitted in the torque limiter 100 in this embodiment, and other components serve as the axial load-bearing portions. The following description will focus primarily on aspects that differ from the embodiments shown in Figs. 4 to 8.

In the embodiment shown in Fig. 9, the flywheel 60 of the torque limiter 100 comprises a body portion 61 and a flange portion 62 extending radially inward from the body portion 61. The torque limiter 100 further comprises a carrier plate 50 fastened together with the flywheel 60, and the carrier plate 50 is spaced from the flange portion 62 in the axial direction by a certain distance. Referring further to Fig. 9, the flange portion 62 forms one of the first axial load-bearing portion or the second axial load-bearing portion of the torque limiter 100. The torque input plate 10 and the driven plate 20 are axially arranged between the carrier plate 50 and the flange portion 62. The carrier plate 50 and the flange portion 62 form two axial load-bearing portions of the torque limiter 100. In the embodiment shown in Fig. 9, the carrier plate 50 is closer to the torque input plate 10, forming the first axial load-bearing portion of the torque limiter 100, and the flange portion 62 is closer to the driven plate 20, forming the second axial load-bearing portion of the torque limiter 100. It is conceivable that the positions of the flange portion 62 of the flywheel 60 and the carrier plate 50 in the axial direction may also be reversed, that is, the flange portion 62 forms the first axial load-bearing portion of the torque limiter 100, and the carrier plate 50 forms the second axial load-bearing portion of the torque limiter 100.

Furthermore, as shown in Fig. 9, the carrier plate 50 extends beyond the mating hole 65 of the flywheel 60 to constrain the axial position of the locking pin 66. The locking pin 66 cannot move axially beyond the carrier plate 50, thereby preventing it from disengaging from the mating hole 65.

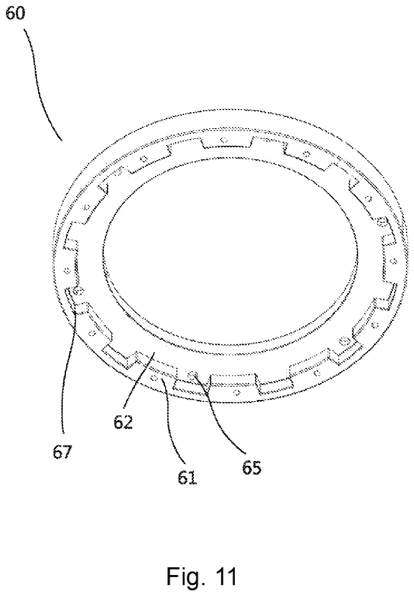

In addition to circumferential fixation through the locking pins 66, the flywheel 60 is further provided with connecting grooves 67 for circumferential fixation and torque transmission between the flywheel 60 and the torque input plate 10. Specifically, as shown in Fig. 11, the connecting grooves 67 are provided on the inner periphery of the body portion 61 of the flywheel 60, and the locking teeth 11 of the torque input plate 10 are inserted into the connecting grooves 67. Thus, the torque input plate 10 and the flywheel 60 are fixed relative to each other on the circumferential direction through the engagement between the locking teeth 11 and the connecting grooves 67. Correspondingly, the mating holes 65 of the flywheel 60 are also arranged in the connecting grooves 67 on the circumferential direction, thereby enabling alignment with the locking holes 12 on the locking teeth 11.

Although not shown in the drawings, the axial load-bearing function of the torque limiter 100 can also be provided solely by the carrier plate 50 fastened to the flywheel 60. In such an embodiment, the flywheel 60 may not comprise the flange portion, and instead, the torque limiter 100 comprises two carrier plates 50 fastened to the flywheel 60 on two axial sides of the flywheel 60, respectively. The two carrier plates 50 form the first load-bearing portion and the second load-bearing portion of the torque limiter 100. In this embodiment, the relative fixation between the flywheel 60 and the torque input plate 10 in the circumferential and radial directions is achieved in a manner similar to that in the embodiment shown in Figs. 9-11. The difference is that, since the carrier plate 50 can constrain the locking pins 66 in two axial directions, the holes on the flywheel 60 that mate with the locking pins 66 may be either blind holes as shown in Fig. 9 or through holes.

The above describes an embodiment in which the torque input plate 10 is fixed in the radial direction relative to the flywheel through the locking teeth. It can be understood that the torque input plate 10 may not be provided with the locking teeth, and the body is directly fixed in the radial direction relative to the flywheel. For example, the locking hole 12 may be directly provided on the body of the torque input plate 10 at a relatively radially outward position, and the flywheel 60 is provided with a mating hole 65 aligned with the locking hole 12. The locking pin 66 passes through the locking hole 12 and is inserted into the mating hole 65, so that the torque input plate 10 is fixed relative to the flywheel 60 in the radial direction.

Certain features, structures or characteristics in one or more embodiments of the present disclosure may be combined appropriately.

The above is a description of the present disclosure and should not be regarded as a limitation thereof. Although several exemplary embodiments of the present disclosure have been described, it will be readily understood by those skilled in the art that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure, and the present disclosure should not be considered to be limited to the specific embodiments disclosed; moreover, modifications to the disclosed embodiments and other embodiments are intended to be included within the scope of the present disclosure.

## Claims

1. A torque limiter (100), **characterized in that** the torque limiter (100) comprises:
a flywheel (60);
a first axial load-bearing portion;
a second axial load-bearing portion, which is fixed relative to the first axial load-bearing portion in an axial direction and is spaced therefrom by a certain distance;
a torque input plate (10), which is fixed relative to the flywheel (60) in a radial direction and drives the flywheel (60) to rotate integrally about a rotation axis (X); and
a driven plate (20), configured to output torque,
wherein the torque input plate (10) and the driven plate (20) are axially arranged between the first axial load-bearing portion and the second axial load-bearing portion, with the torque input plate (10) being arranged closer to the first axial load-bearing portion, and the driven plate (20) being arranged closer to the second axial load-bearing portion, and
wherein the torque input plate (10) and the driven plate (20) abut against each other with a certain axial force, and the torque input plate (10) drives the driven plate (20) to rotate about the rotation axis (X) by means of friction between the torque input plate (10) and the driven plate (20).

2. The torque limiter (100) according to claim 1, **characterized in that**
the torque limiter (100) further comprises an elastic member (30) axially arranged between the first axial load-bearing portion and the second axial load-bearing portion, and the elastic member (30) biases one of the torque input plate (10) and the driven plate (20) toward the other of the torque input plate (10) and the driven plate (20).

3. The torque limiter (100) according to claim 2, **characterized in that**
the torque input plate (10) comprises a plurality of locking teeth (11) extending radially outward from an outer periphery thereof, and the torque input plate (10) is fixed relative to the flywheel (60) in the radial direction through the locking teeth (11).

4. The torque limiter (100) according to claim 3, **characterized in that**
the elastic member (30) is arranged between the first axial load-bearing portion and the torque input plate (10); or
the elastic member (30) is arranged between the driven plate (20) and the second axial load-bearing portion.

5. The torque limiter (100) according to claim 3, **characterized in that**
the torque limiter (100) further comprises a friction lining (21) arranged on at least one of two axial sides adjacent to the driven plate (20).

6. The torque limiter (100) according to any one of claims 3 to 5, **characterized in that**
at least one of the plurality of locking teeth (11) is provided with a locking hole (12), and the torque input plate (10) is fastened to the flywheel (60) through a fastener (63) passing through the locking hole (12).

7. The torque limiter (100) according to claim 6, **characterized in that** the torque limiter (100) further comprises an intermediate plate (40), and the intermediate plate (40) comprises:
a plurality of load-bearing tabs (41);
a load-bearing ring (42), wherein the load-bearing ring (42) is spaced from the load-bearing tabs (41) in the axial direction by a certain distance, and each load-bearing tab (41) is connected to the load-bearing ring (42) through a pair of connecting strips (43); and
a plurality of load-bearing teeth (44) each arranged on a radially inner side of the corresponding load-bearing tab (41), with each load-bearing tooth (44) being arranged in a circumferential direction between a pair of corresponding connecting strips (43),
wherein the load-bearing teeth (44) form a first axial load-bearing portion of the torque limiter (100), and the load-bearing ring (42) forms a second axial load-bearing portion of the torque limiter (100).

8. The torque limiter (100) according to claim 7, **characterized in that**
the load-bearing teeth (44) are spaced from the load-bearing tabs (41) in the axial direction by a certain distance, and are connected to the load-bearing tabs (41) through bent portions (45).

9. The torque limiter (100) according to claim 7 or 8, **characterized in that**
the locking tooth (11) is located in the circumferential direction between two adjacent load-bearing tabs (41).

10. The torque limiter (100) according to claim 9, **characterized in that**
the torque input plate (10) further comprises a plurality of transmission teeth (13) extending radially outward from an outer periphery thereof, each transmission tooth (13) being inserted between a pair of corresponding connecting strips (43).

11. The torque limiter (100) according to claim 7 or 8, **characterized in that**
the flywheel (60) comprises recessed portions (64) that are recessed in an axial direction, and the locking teeth (11) are received within the recessed portions (64).

12. The torque limiter (100) according to any one of claims 3 to 5, **characterized in that**
at least one of the plurality of locking teeth (11) is provided with a locking hole (12), the flywheel (60) is provided with a mating hole (65) aligned with the locking hole (12), and a locking pin (66) passes through the locking hole (12) and is inserted into the mating hole (65), so that the torque input plate (10) is fixed relative to the flywheel (60) in the radial direction.

13. The torque limiter (100) according to claim 12, **characterized in that**
the flywheel (60) comprises a body portion (61) and a flange portion (62) extending radially inward from the body portion (61), and the flange portion (62) forms one of the first axial load-bearing portion or the second axial load-bearing portion of the torque limiter (100).

14. The torque limiter (100) according to claim 13, **characterized in that**
the torque limiter (100) further comprises a carrier plate (50) fastened together with the flywheel (60), and the carrier plate (50) is spaced from the flange portion (62) in the axial direction by a certain distance, and forms the other of the first axial load-bearing portion or the second axial load-bearing portion of the torque limiter (100).

15. The torque limiter (100) according to claim 14, **characterized in that**
the carrier plate (50) extends beyond the mating hole (65) to constrain an axial position of the locking pin (66).

16. The torque limiter (100) according to any one of claims 13 to 15, **characterized in that**
the flywheel (60) comprises connecting grooves (67) arranged on an inner periphery of the body portion (61), the mating holes (65) are located in the connecting grooves (67) in the circumferential direction, and the locking teeth (11) are inserted into the connecting grooves (67).

17. The torque limiter (100) according to claim 12, **characterized in that**
the torque limiter (100) further comprises two carrier plates (50) that are fastened together with the flywheel (60) on two axial sides of the flywheel (60), respectively, and the two carrier plates (50) form a first load-bearing portion and a second load-bearing portion of the torque limiter (100), respectively.

18. The torque limiter (100) according to claim 17, **characterized in that**
the flywheel (60) comprises connecting grooves (67) arranged on an inner periphery thereof, and the locking teeth (11) are inserted into the coupling grooves (65).

19. The torque limiter (100) according to claim 2, **characterized in that**
the torque input plate (10) is provided with at least one locking hole (12), the flywheel (60) is provided with a mating hole (65) aligned with the locking hole (12), and a locking pin (66) passes through the locking hole (12) and is inserted into the mating hole (65), so that the torque input plate (10) is fixed relative to the flywheel (60) in the radial direction.

20. A transmission assembly (1), **characterized in that** the transmission assembly (1) comprises:
the torque limiter (100) as claimed in any one of claims 1 to 19, and
a torsional vibration damper (200), wherein the torsional vibration damper (200) comprises an input portion (210), an output portion (220), and a spring (230) arranged to be circumferentially compressed between the input portion (210) and the output portion (220),
wherein the input portion (210) of the torsional vibration damper (200) is fastened together with the driven plate (20) of the torque limiter (100), or the input portion (210) of the torsional vibration damper (200) is integrally formed with the driven plate (20) of the torque limiter (100).

21. The transmission assembly (1) according to claim 20, **characterized in that** the torsional vibration damper (200) comprises a through hole (201), and a fastener is allowed to pass through the through hole (201) to fasten the torque input plate (10) of the torque limiter (100) to an upstream component of the transmission assembly.

22. A vehicle, comprising the transmission assembly (1) according to claim 20 or 21.
